# EUROPEAN PATENT APPLICATION

(11) **EP 3 375 958 A1**
(43) Date of publication of application: **19.09.2018**
(21) Application number: 18396001.2
(22) Date of filing: 13.03.2018
(51) Int. Cl.: E05B 65/00, E05B 83/02, E05C 3/04, E05D 15/26, E05F 7/02, E05B 15/00, B60J 5/06

(54) **LATCHING MECHANISM FOR A CARGO BODY DOOR**

(30) Priority: 13.03.2017 FI 20170041; 23.10.2017 FI 20170145
(71) Applicant: Vak Oy, 21310 Vahto (FI)
(72) Inventor: Hulmi, Atte, FI-21530 Paimio (FI)
(74) Representative: Pirhonen, Kari Lennart

(57) **Abstract**

A latching mechanism for a folding door (10) of a cargo body, comprising a latching and supporting element (43) adjoined in conjunction with the floor (11) of the cargo body, the latching and supporting element supporting at least one door (20a, 20b and 20c) in a vertical direction when the door is being closed. The lower edge of the folding door (20b) comprises a latching element (33) or a similar surface resting on the latching and supporting element (43) in conjunction with the floor (11) of the cargo body as the door is being latched. The latching and supporting element (43) in conjunction with the floor (11) of the cargo body has a roller surface formed by at least one roller (45a, 45b) or a similar roller element.

## Description

### OBJECT OF THE INVENTION

The object of the invention is a latching mechanism for a cargo body door according to the preamble to claim 1. In particular, the object of the invention is a latching mechanism for a cargo body door of equipment to be used in road transport, such as a lorry or a trailer.

### PRIOR ART

Doors that swing open, are foldable or can be moved to the side are generally used in the cargo body of a lorry or a trailer. In a cargo body with a folding door, the carrier track of the folding doors is usually located in proximity to the upper edge of the cargo body door opening, and the doors are borne by the roof structure of the cargo body. In such a solution, the structure of the folding doors must be designed carefully to achieve smooth movement of the doors between the roof structure and the floor structure of the cargo body.

A common disadvantage of the known structure is that, with the doors being borne by the roof structure of the cargo body, the roof structure bends and the doors are liable to settle downwards. When closing the doors in such a case, the latching elements located in the door and the cargo body, to be mated with one another, will not always align at the same elevation, which may result in difficulty when closing the doors. For this reason, particularly in long body structures, the roof structure is often supported in the middle of the door opening by means of a support pillar, which prevents the roof structure from bending and makes it easier to close the doors.

Another factor that makes closing the doors of a cargo body more difficult is that the cargo body is a flexible structure that undergoes deformations every time there is a change in the shape of the road surface under the lorry or the trailer. The resulting deformation in the cargo body can also lead to inaccurate alignment of the counterpieces of the latching elements in the door and in the cargo body when the doors are being closed. Uneven ground at a loading or unloading site may thus also result in difficulty to close the cargo body doors. To eliminate this disadvantage, sufficient vertical clearance is often arranged in the latching elements in known door latching mechanisms to enable latching of the door even if the latching elements in the door are not at the exact correct location relative to the latching elements in the cargo body.

However, a vertical clearance arranged to make closing of the doors easier may easily cause a problem with wear and tear in the latching elements of the doors. This is because deformations take place in the cargo body during travel due to unevenness of the road, which allows movement of the doors floating from the roof structure of the cargo body. This also makes the counterpieces of the latching elements in the door and in the cargo body move relative to one another, and they may wear down quickly. Worn out latching elements will become unable to properly latch the doors.

### PURPOSE OF THE INVENTION

The purpose of this invention is to create a new door latching mechanism that overcomes the disadvantages presented above. A further purpose of this invention is to create a latching mechanism that works reliably and is easier to use than known latching mechanisms.

### CHARACTERISTICS OF THE INVENTION

A latching mechanism according to the invention is characterised in what has been presented in the characteristics section of claim 1. A device according to the invention-is additionally characterised in what has been presented in the dependent claims.

According to the invention, doors displaced by moving them laterally are borne by the roof structure, but as a door is being locked, the weight of the door transfers to a latching element in conjunction with the floor structure of the cargo body and, when the door is locked, the latching element in the floor structure bears the weight of the door. To implement such action, a latching mechanism for doors according to the invention has a roller surface that activates bearing and/or guidance of the door as the door is being closed such that the door raises by means of the roller surface to such an elevation where the latching elements in the door and the latching elements in conjunction with the floor structure of the cargo body are at a suitable elevation relative to one another. This way the latching elements of the door and the latching elements in conjunction with the floor structure of the cargo body are easy to latch into one another.

Thus, the door of the cargo body is easy to close and latch even on uneven terrain, where the cargo body is not horizontal due to the unevenness of the terrain. In such a situation, the latching elements of the door and of the cargo body are not necessarily at the same elevation, due to deformations in the cargo body. With a roller surface according to the invention, however, the door can be raised to such a convenient elevation while it is being closed that the latching elements of the door and the latching elements in conjunction with the floor structure of the cargo body can be easily latched with one another. The roller surface bearing and/or guiding the door can be comprised of one or more rollers, bearings, wheels, roller chains, balls or some other similar roller element, and the roller element may be adjoined with the floor of the cargo body, with a latching element adjoined with the floor, with the door, or with a latching element adjoined with the door. If the roller surface has two or more rollers, these are most advantageously located such that the rollers are arranged to jointly form an inclined roller surface. This way, the inclined roller surface causes the door to rise upwards as the door moves onto the roller surface while it is being locked.

According to the invention, as the door is being closed, a roller surface formed by at least one roller in the latching mechanism supports the door and lifts it up such that the latching elements latching with one another, adjoined with the door and with the floor of the cargo body, are at precisely the right elevation relative to one at the moment when the door is latched. This way, the latching elements do not require extensive clearances, but closing and latching the door will still be easy. In a structure according to the invention, as the doors are closed and latched, the latching elements in the doors will latch easily even if the roof structure has become bent and the doors have settled downwards. Thanks to this, a structure according to the invention enables a lighter and simpler roof structure, and it is also possible to produce long trailer body structures without a support for the roof structure in the middle of the door opening.

With a roller surface or a roller in the door latching mechanism bearing the door as it is being closed and latched, it is easy to close and latch the door. This way it is also possible to render the structure of the latching elements such that the clearances are smaller. Thus, the latching elements cannot move during travel, whereby the wear and tear in latching mechanisms for doors according to the invention is significantly less intensive than in known door structures.

According to the invention, the door can be closed such that, as the door is being closed, the door or the latching element adjoined with it extends onto a roller surface in conjunction with the cargo body floor. When the door is locked, the door can also be supported on top of this roller surface. In the latching position, however, the door can also be supported on top of a support surface in conjunction with the roller surface. This way, the weight of the door will not exert wear and tear during travel on the roller surface used for locking the door.

In a latching mechanism according to the invention, the roller surface can also be adjoined with the door. In such a case, there is a counterpiece, for example, in conjunction with the floor of the cargo body, on which the counterpiece adjoined with the door rests. In this case, the counterpiece has a portion formed by an inclined surface, for example, which bears the door during the closing movement. There can additionally be support surfaces in conjunction with the door and the floor of the cargo body even in this case, the support surfaces bearing the door while it is closed, whereby the weight of the door does not exert wear and tear on the roller surface during travel.

The latching mechanism of a cargo body door also customarily has a vertical latch pin in conjunction with the floor and/or roof of the cargo body, to which pin the hook-like latch nose of the latching element in the door latches. According to the invention, also this pin can be replaced with a latch roller. The roller surface formed by the roller can also have a functionality in the guidance and latching of the door.

Similarly, the latch nose of the latching element can also be fitted with a roller surface, such as a roller, which latches into the latch pin. This way in both these solutions according to the invention, the latch nose in the door, or its counterpiece, will not wear down similarly to known latching elements.

Due what is presented above, doors according to the invention will close more easily and the latching mechanisms in the doors will operate better and more accurately. Latching mechanisms according to the invention also allow substantially smaller clearances than known latching mechanisms because doors according to the invention are well supported while being closed. Due to this, deformations in the cargo body caused by unevenness of the ground under a lorry or a trailer do not make the closing and latching of the doors more difficult, which substantially decreases the wear and tear of the latching elements.

As presented above, the invention is comprised of a latching mechanism for a cargo body door, where the mechanism is comprised of a latching element on the lower edge of the door and a latching and supporting element in conjunction with the floor of the cargo body, which elements latch into one another as the door is being closed. The latching mechanism is comprised of a roller surface in conjunction with the latching element located on the lower edge of the door of the cargo body or with the latching and supporting element in conjunction with the floor of the cargo body, the roller surface causing the door to lift upwards as the door is being closed such that the latching element of the door and the latching and supporting element in conjunction with the floor of the cargo body are located at such an elevation relative to one another that the door can be easily closed and latched. The roller surface can be formed by one or more roller, bearing, wheel, roller chain, ball or similar roller elements.

In the door latching mechanism, the roller surface is located in the latching and supporting element in conjunction with the floor of the cargo body, and the lower edge of the door has a latching element that comes on top of the roller surface. Alternatively, in the door latching mechanism, the roller surface is located in the latching element on the lower edge of the door, said latching element resting on the latching and supporting element in conjunction with the floor of the cargo body as the door is being closed. In the door latching mechanism, the roller surface formed by two or more rollers in the latching and supporting element in conjunction with the floor of the cargo body and the support surface in the door are two separate pieces or they have been arranged as a single piece.

In the door latching mechanism, the latching and supporting element is most advantageously comprised of an additional vertical latch roller, to which the latch tip of the latching element can be latched in a lateral direction. Furthermore, the door latching mechanism is comprised of a latch nose and a latching and supporting element in conjunction with the floor of the cargo body, which latching and supporting element has a vertical latch roller, to which the latch nose of the door can be latched.

In the door latching mechanism, the latching mechanism of a folding door is additionally comprised of one or more support surfaces in conjunction with the floor of the cargo body, a support plate in conjunction with the door resting on said support surface while the cargo body is loaded with cargo.

### EXAMPLES

In the following, the invention is described using examples with reference to the appended drawings, in which

### LIST OF FIGURES

- Fig. 1: is a schematic top view of a side door of a cargo body being closed.
- Fig. 2: shows the next stage of the side door of the cargo body of Fig. 1 being closed.
- Fig. 3: shows the side door of the cargo body of Fig. 1 closed and latched.
- Fig. 4: is a schematic top view of the side doors of the closed side doors of a cargo body and a more illustrative view of the latching elements comprised in the latching mechanism.
- Fig. 5: is a side view of latching elements in conjunction with the floor of the cargo body, to which the latching elements in the side door of the cargo body can be latched.
- Fig. 6: is a top view of the latching elements in conjunction with the floor of the cargo body, to which the latching elements in the side doors of the cargo body can be latched.
- Fig. 7: is a schematic top view of a door of a cargo body with two folding doors comprised of three parts, the doors opening to opposite directions.
- Fig. 8: is a schematic top view of the three-part folding door of a cargo body being closed.
- Fig. 9: is an axonometric projection of a latching and supporting element in conjunction with the floor of the cargo body, the side door resting on said latching and supporting element, to which the latching element of the side door can be latched.
- Fig. 10: shows a latching and supporting element in conjunction with the floor of the cargo body.
- Fig. 11: is an axonometric projection of a latching and supporting element in conjunction with the floor of the cargo body, the side door resting on said latching and supporting element, to which the latching element of the side door can be latched.
- Fig. 11B: shows a latching and supporting element in conjunction with the floor of the cargo body, the side door resting on said latching and supporting element, to which the latching element of the side door can be latched.
- Fig. 12: is an axonometric projection of a latching element on the lower edge of a side door of the cargo body, the side door resting on and being capable to be latched to a latching and supporting element in conjunction with the floor of the cargo body by means of said latching element.
- Fig. 13: shows the latching element on the lower edge of the side door.
- Fig. 14: shows the latching element on the lower edge of the side door.
- Fig. 15: is an axonometric projection of an oblique side view of a detail of the opened folding door.
- Fig. 16: is an axonometric projection of an oblique side view of a detail of the folding door when being closed and latched.
- Fig. 17: is a magnified detail of Fig. 16.
- Figures 18A to 18C: show a side view of the movement of the latching element located on the lower edge of a side door of the cargo body relative to the latching and supporting element in conjunction with the floor of the cargo body.
- Figures 19A to 19C: show a top view of the movement of the latching element relative to the latching and supporting element shown in Figures 18A to 18C.
- Fig. 20: is a schematic side view of the side door of the cargo body and of the latching elements in conjunction with the floor and the roof of the cargo body.
- Fig. 21: corresponds to Fig. 1 and shows the closing action of the side door of the cargo body.

### DESCRIPTION OF THE FIGURES

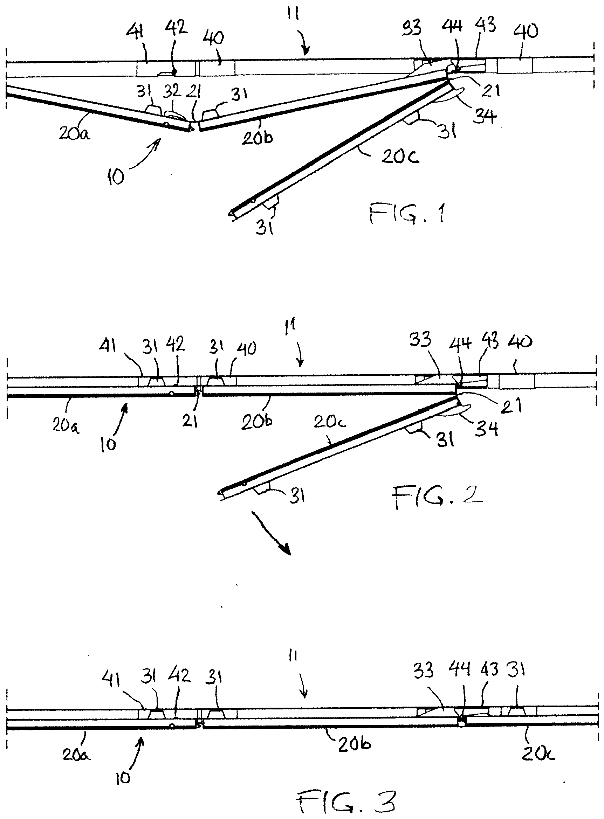

Fig. 1 shows a schematic top view of the side doors of a cargo body when being closed. In Fig. 1, the side door of the cargo body is a folding door 10 formed by three doors 20a, 20b and 20c joined with one another by hinges 21. As the side door 10 is being closed, the doors 20b and 20c move to the right in Fig. 1 during the first stage, whereby a latching element 33 included in the latching mechanism, located on the right edge of the door 20b, pushes onto a latching and supporting element 43 in conjunction with the floor of the cargo body and fitted with a roller surface. Because this way the latching and supporting element 43 bears the door, it is now easy to press the doors 20a and 20b against the edge of the floor 11 of the cargo body, whereby also support plates 31 located on the lower edges of the doors 20a and 20b push onto a support surface 40 and onto a latching and supporting element 41 in the floor of the cargo body. Fig. 1 also shows that a latch nose 32 comprised in the latching mechanism of the door is in a position where it can be pushed into the latching and supporting element 41 and pivoted behind a latch roller 42 such that the latch nose 32 latches into the latch roller 42.

Because two separate latching and supporting elements are provided in conjunction with the floor of the cargo body for the folding door, the latching and supporting element 43 fitted with a roller surface can be referred to as the first latching and supporting element and the latching and supporting element 41 with the latch roller 42 for the latch nose 32 can be referred to as the second latching and supporting element.

Fig. 2 shows a setting where a latching element 33 comprised in the latching mechanism and located on the right edge of the door 20b, is on top of the latching and supporting element 43 in conjunction with the floor of the cargo body. A latch tip in the same latching element 33 has pushed behind a latch roller 44 in the latching and supporting element 43 and has thus latched the right edge of the door 20b into place. This way the door 20a and the left edge of the door 20b joined with it by a hinge can be latched into place-by pivoting the latch nose 32 located on the door 20a behind the vertical latch roller 42 located in the latching and supporting element 41. If in some cases the latch roller 42 is not considered necessary, it can be replaced with a latch pin.

After this, the door 20c is closed by pivoting it about the hinge 21, whereby a latch claw 34, comprised in the latching mechanism and adjoined to the door 20c, pivots and latches behind the latch roller 44 located in the latching and supporting element 43. When the door 20c is closed and pivoted against the edge of the floor 11 of the cargo body, the door 20c is latched into place similarly to the door 20a, i.e. the latch nose 32 of the latching element is pivoted behind the latch roller in the floor of the cargo body. Fig. 3 shows a setting where all the doors 20a, 20b and 20c of the folding door 10 of a cargo body are closed.

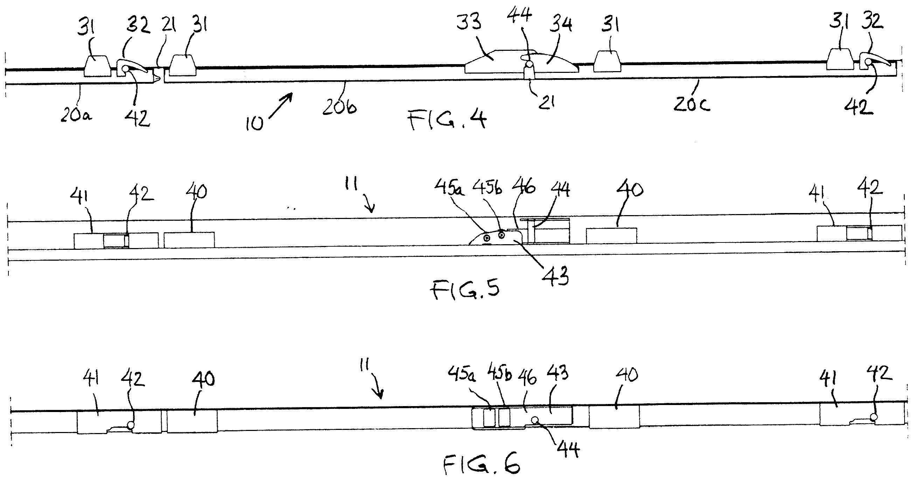

Figures 4 to 6 show the folding door 10 of a cargo body as a schematic view and, more illustratively, such that the latching elements comprised in the latching mechanism of the doors 20a, 20b and 20c are visible even though they are located behind the doors and cannot be seen, at least not entirely, when viewed from the outside. In Fig. 4, the support plates 31 located on the lower edges of the doors 20a, 20b and 20c push onto the support surface 40 and onto the latching and supporting element 41 in the floor of the cargo body. The doors 20a and 20c are latched into the latching and support element 41 on the lower edge of the floor of the cargo body by pivoting the latch nose 32 of the latching element in the door behind the latch roller 42. The opposite edge of the door 20b latches such that latch tip 37 of the latching element 33 pushes behind the latch roller 44 located in the latching and support element 43 in conjunction with the floor 11 of the cargo body.

As the door 20c is closed by pivoting it about the hinge 21, the latch claw 34 adjoined to the door 20c pivots behind the latch roller 44 or a pin located in the latching and supporting element 43. After this, the door 20c is latched by pivoting the latch nose 32 of the latching element in the door 20c into the latching and support element 43 in conjunction with the floor of the cargo body, behind the latch roller 42 or a pin.

Fig. 5 shows a side view of the latching elements 41 and 43 in conjunction with the floor of the cargo body. Fig. 6 shows a top view of the latching elements 41 and 43 in conjunction with the floor of the cargo body.

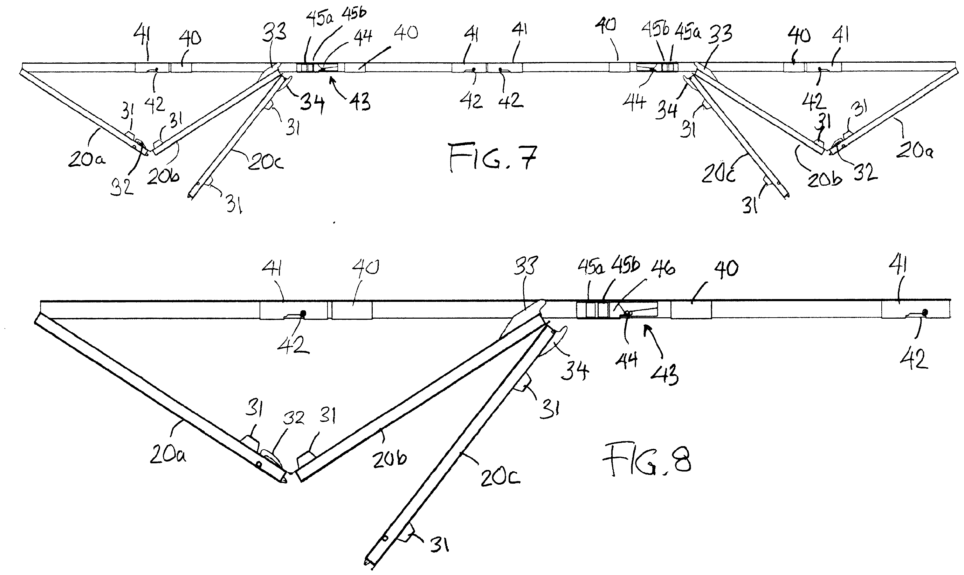

Fig. 7 shows a schematic view of two folding doors adjoined with the cargo body, the doors being comprised of three parts and opening in opposite directions. Fig. 8 shows a more detailed view of only one of the folding doors because similar opening and closing action takes place also in the other door, but in the opposite direction. In Figures 7 and 8, the doors are still opened wide enough to show the structure of the latching and supporting elements 43 comprised in the latching mechanism. The latching and supporting element 43 has a roller surface and support surface 46 formed by the rollers 45a and 45b.

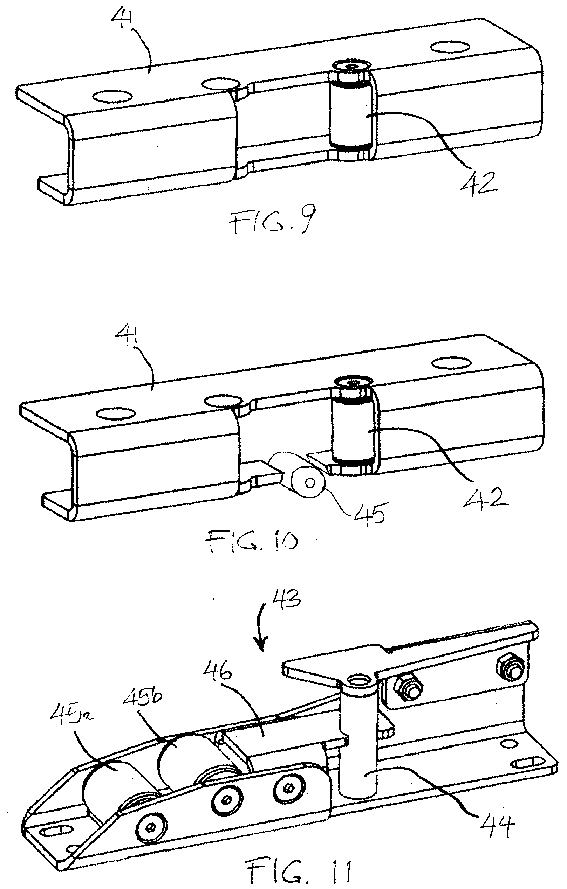

Fig. 9 shows a latching and supporting element 41 comprised in the latching mechanism and in conjunction with the floor 11 of the cargo body, the support plate 31 located on the lower edge of the door 20a moving or also resting on said latching and supporting element. The support plate 31 adjoined with the door can according to the invention be located such that, when the cargo body is not loaded, a clearance remains between the support plate 31 and the latching and supporting element 41 in conjunction with the floor 11 of the cargo body as the door is being closed. Because the support element 33 adjoined with the door already rests on the latching and supporting element 43 in conjunction with the floor 11 of the cargo body as the door is being closed, there is no need for simultaneous support by the support plates 33. The structures of the cargo body will bend when the cargo body is loaded, however, and in such a setting, the support plate 31 adjoined with the door 20a can be arranged to rest also on the latching and supporting element 41.

In Fig. 10, the latch nose 32 of the latching element in the door 20a can be latched into the vertical latch roller 42, which can rotate, and thus the wear and tear between the latching parts is minimal. Fig. 10 shows the latching and supporting element 41 of the latching mechanism, which can, in addition to the vertical latch roller 42, also have a horizontal roller 45 which guides the latch nose 32 vertically as the door is being latched.

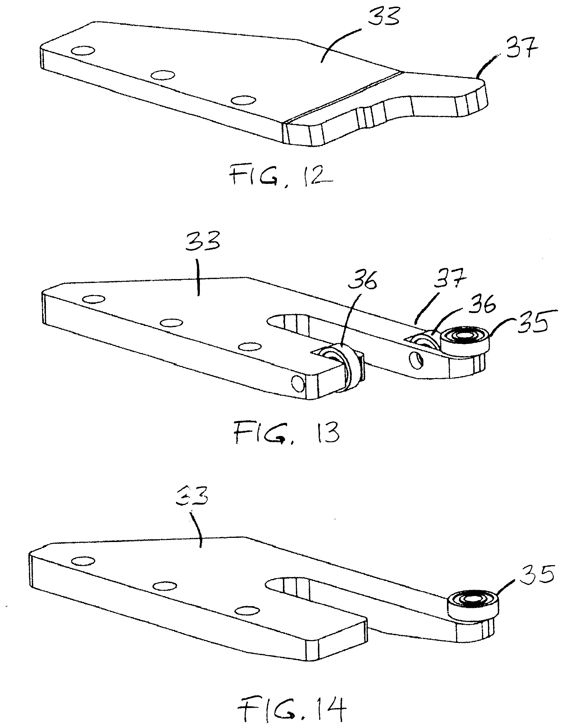

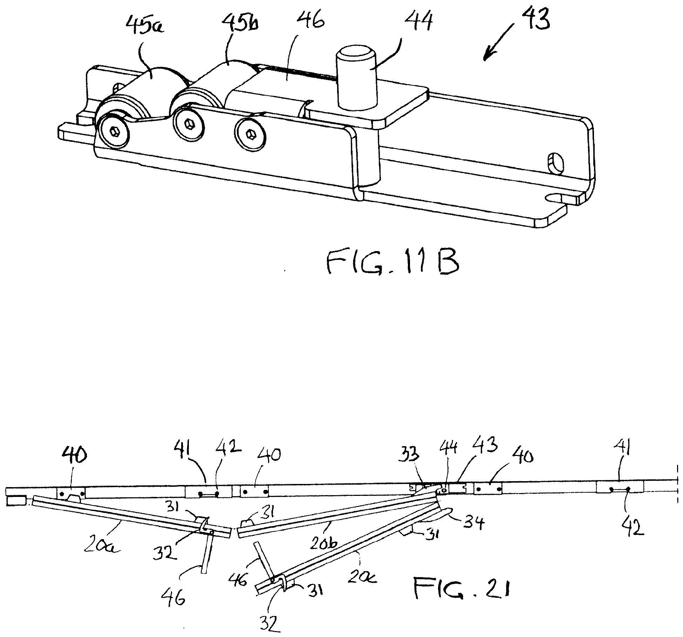

Fig. 11 shows an axonometric projection of the latching and supporting element 43 in conjunction with the floor 11 of the cargo body, comprised in the latching mechanism, the latching and supporting element having parts bearing the door or a latching element adjoined with the door and also a part that latches the door. The portion bearing the door is a roller surface, which in Fig. 11 is formed by two rollers 45a and 45b that bear the door or the latching element adjoined with it as the door is being closed. The elevation of the rollers 45a and 45b or their size can be arranged such that they jointly form an inclined roller surface. The purpose of the roller surface is to form a guide for the latching element 33 on the lower part of the door 20b, the latching element being shown in greater detail in Fig. 12. In the closed position, the door 20b could stay on top of the roller 45a or 45b of the latching and supporting element 43, but most advantageously, when latched, the door 20b rests on the support surface 46 in the latching and supporting element 43, and thus the weight of the door does not stay on the rollers 45a or 45b.

In Fig. 11, the rollers 45a and 45b and the support surface 46 of the latching and supporting element 43 are shown such that they are in the same piece. However, they can also be separate pieces such that the rollers 45a and 45b are in a single piece and the support surface 46 or the plane is in another piece, even though these pieces, in practice, produce joint action as the door is being closed. Furthermore, the latching and supporting element 43 in conjunction with the floor 11 of the cargo body has a latch roller 44 behind which the latch tip 37 of the latching element 33 latches.

Fig. 11B shows the structure of a latching and supporting element 43 in conjunction with the floor of the cargo body, where the latch roller 44 is supported at its midpoint by means of a support surface 46. This way the latching element 33 adjoined with the door 20b latches to the part of the latch roller 44 above the support surface 46 and, correspondingly, the latch claw 34 adjoined with the door 20c latches to the part of the latch roller 44 under the support surface 46.

Fig. 12 shows an axonometric projection of a latching element 33, comprised in the latching mechanism and located on the lower edge of the side door 20b of the cargo body, the latching element comprising a surface that rests on the rollers 45a and 45b shown in Fig. 11 and, at the end of it, the latch tip 37 that pushes behind the latch roller 44 shown in Fig. 11 and latches the door 20b in its place. The latching element 33 in Fig. 12 is plate-shaped and has a slightly upwards directed latch tip 37 that forms an inclined surface. As the door of the cargo body is being closed, the latch tip 37 of the latching element 33 pushes onto the rollers 45a and 45b shown in Fig. 11 such that the door rests on the rollers 45a and 45b. Because the rollers 45a and 45b form an inclined roller surface, they simultaneously lift the door upwards. When the door is entirely closed, the latching element 33 moves over the rollers 45a and 45b onto the support surface 46 which the latching element 33 and simultaneously also the door adjoined with it rest on. The latch tip 37 of the latching element 33 latches behind the latch roller 44 shown in Fig. 11.

Fig. 13 shows the latching element 33 intended for the lower edge of the side door 20b of a cargo body, said latching element having in its latch tip 37 rollers 36 or bearings bearing a vertical load and a roller 35 bearing a horizontal load. Thereby it is not necessary for the latching and supporting element 43 of Fig. 11 to have the rollers 45a and 45b, instead of which it may only have an inclined plane surface.

Fig. 14 shows the latching element 33 of a latching mechanism on the lower edge of the side door 20b of a cargo body, said latching element only having in its latch tip 37 the roller 35 bearing a horizontal load. Other solutions are also possible. What is essential is that locations susceptible to wear and tear have at least one roller or bearing.

Latching elements comprised in the latching mechanism and located on the lower edge of the folding door were presented above. At least some of corresponding elements can be located also on the upper edge of the door.

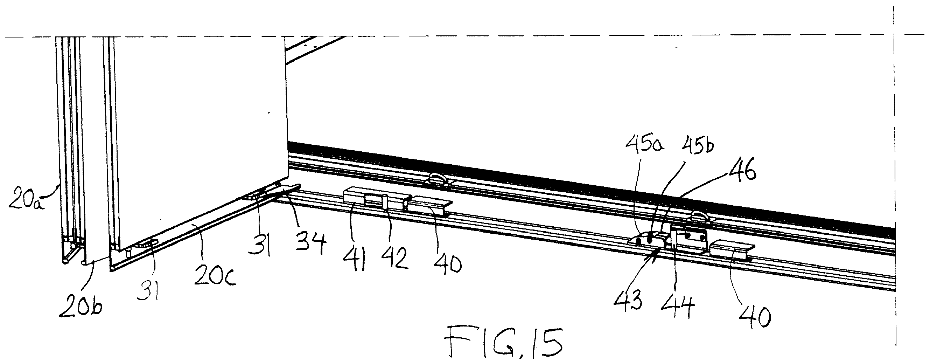

Fig. 15 is an axonometric projection of an oblique side view of a detail of the opened folding door. The figure shows the latching and supporting elements 41 and 43 of the latching mechanism and their latch rollers 42 and 44, to which the latching elements adjoined with the doors are latched.

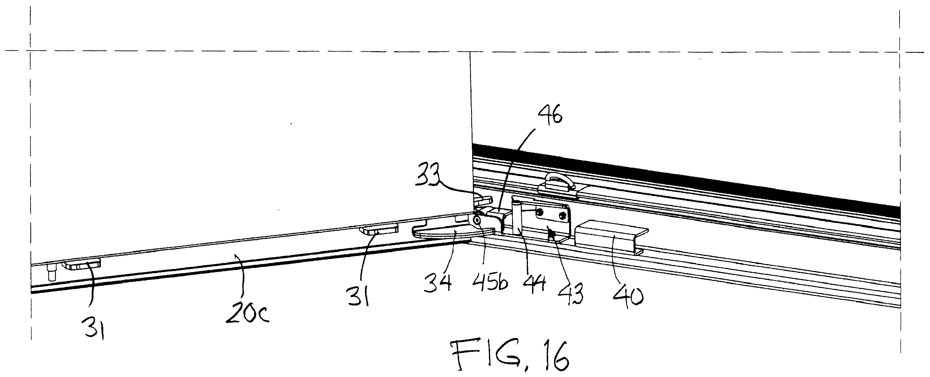

Fig. 16 shows the latching element 33 of the latching mechanism in the middle door 20b of the folding door when being closed, moving onto the rollers 45a and 45b of the rolling surface of the latching and supporting element 43 such that the rollers start to bear the door 20b and the doors 20a and 20c adjoined with it by hinges.

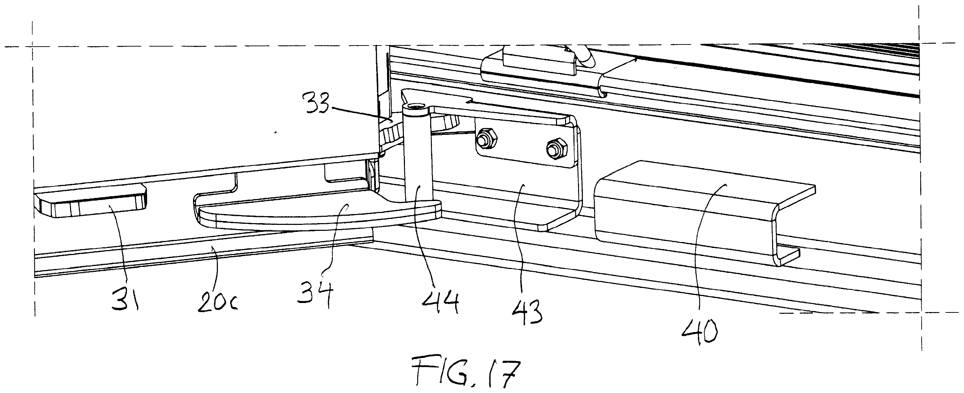

In Fig. 17, the latching element 33 of the latching mechanism in the middle door 20b has reached a point where it is already on the support surface 46 of the latching and supporting element 43. A latch tip 37 in the same latching element 33 has pushed behind a latch roller 44 in the latching and supporting element 43 and has thus latched the right edge of the door 20b in its place. After this, the door 20c can be pivoted to close it, whereby the latching claw 34 adjoined with it latches behind the latch roller 44.

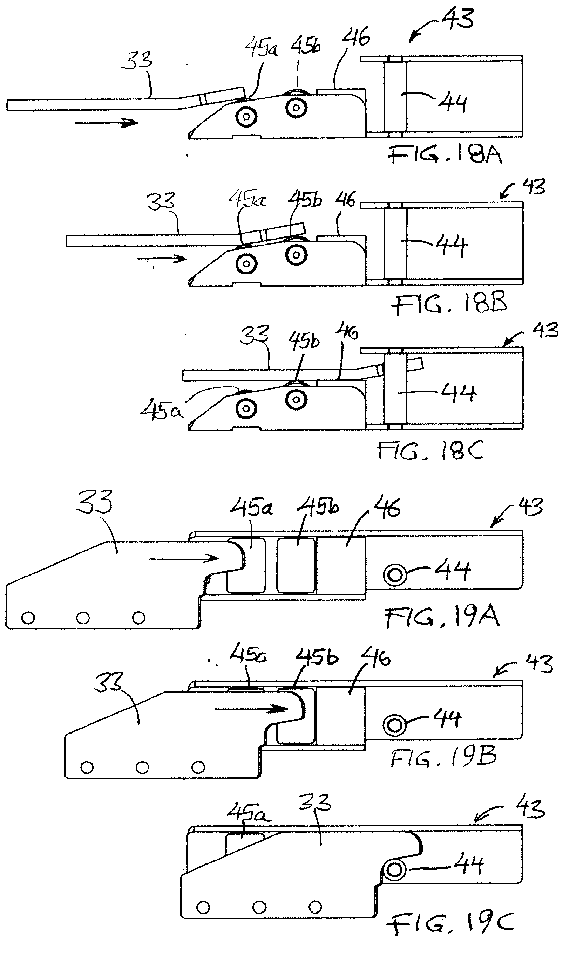

Figures 18A to 18C show a side view of the movement of the latching element 33 of the latching mechanism located in conjunction with the lower edge of the side door 20b of the cargo body into the latching and supporting element 43 in conjunction with the floor of the cargo body. Fig. 18A shows a setting where the door 20b is being closed and moves, borne on a rail in the roof of the cargo body, to the right in Fig. 18A. In such a setting, the roof of the cargo body has bent and settled downwards due to the weight of the door 20b to the extent that, as the latching element 33 of the latching mechanism located on the lower edge of the door comes near the latching and supporting element 43 in conjunction with the floor of the cargo body, the door 20b has also bent slightly downwards. As a result of this, the latching element 33 located on the lower edge of the door 20b in the latching mechanism and the latching and supporting element 43 in conjunction with the floor of the cargo body are not at the exact same elevation. In known solutions, precisely this situation often causes major problems.

According to the invention, the same elevation is achieved for the latching elements of the latching mechanism, thereby also making latching of the door easy, such that a roller surface is arranged between the latching and supporting element 43 in conjunction with the floor of the cargo body and the latching element 33 on the lower edge of the door 20b, the roller surface being formed by the rollers 45a and 45 in Figures 18A to 19C. The purpose of the roller surface is to lift up the latching element 33 of the door 20b, and thereby also the door as it is being latched, to the extent that the latching element 33 of the door is at a suitable elevation relative to the latching and supporting element 43 in conjunction with the floor of the cargo body. Thus, the latching and supporting elements 33 and 43 of the door 20b and of the cargo body in the latching mechanism latch easily with one another and it is easy to close the door 20b.

According to the invention, the roller surface applied to lift up the door 20b in the latching mechanism can be adjoined either with the latching and supporting element 43 in conjunction with the floor of the cargo body, as shown in Fig. 11, or with the latching element 33 on the lower edge of the door 20b, as shown in Fig. 13. According to the invention, a roller surface adjoined with a latching and supporting element 43 in conjunction with the floor of the cargo body is more advantageous. Figures 18A to 18C and Figures 19A to 19C show a solution where the roller surface formed by the rollers 45a and 45 is located in the latching and supporting element 43 on the lower edge of the side door 20b of the cargo body. As the door 20b is being closed, the latching element 33 of the latching mechanism on the lower edge of the door 20b rests on this support surface.

In Fig. 18A, the door 20b is being closed and the latching element 33 of the latching mechanism located on the lower edge of the door 20b meets the roller 45a of the roller surface in the latching and supporting element 43 in conjunction with the floor of the cargo body. The end of the latching element 33 forms a latch tip 37 which is bent slightly upwards such that the latching element 33 can easily lift up onto the roller 45a.

In Fig. 18B, the door 20b has moved to the right in Fig. 18B such that the latching element 33 of the latching mechanism has lifted up further onto the second roller 45b of the roller surface. As the door 20b is being moved further to the right in Fig. 18B, the latching element 33 moves onto the support surface 46, as shown in Fig. 18C. The door 20b and its latching mechanism are now latched and the weight of the door 20b rests on the support surface 46. Such a latched setting of the latching mechanism is advantageous because the weight of the door 20b will not exert wear and tear on the rollers 45a and 45b during travel.

Fig. 18C shows that, simultaneously with the latching element 33 of the latching mechanism moving to the right in Fig. 18C onto the support surface 46, the latching element 33 has also latched behind the latch roller 44. This latching action is also clearly visible in Figures 19A to 19C where the movement of the latching element 33 located on the lower edge of the door 20b relative to the latching and supporting element 43 in conjunction with the floor of the cargo body is shown as a top view. When the latching element 33 has lifted up onto the rollers 45a and 45b of the roller surface and further onto the support surface 46, latch tip 37 of the latching element 33 latches behind the vertical latch roller 44, whereby the door 20b and its latching mechanism become latched.

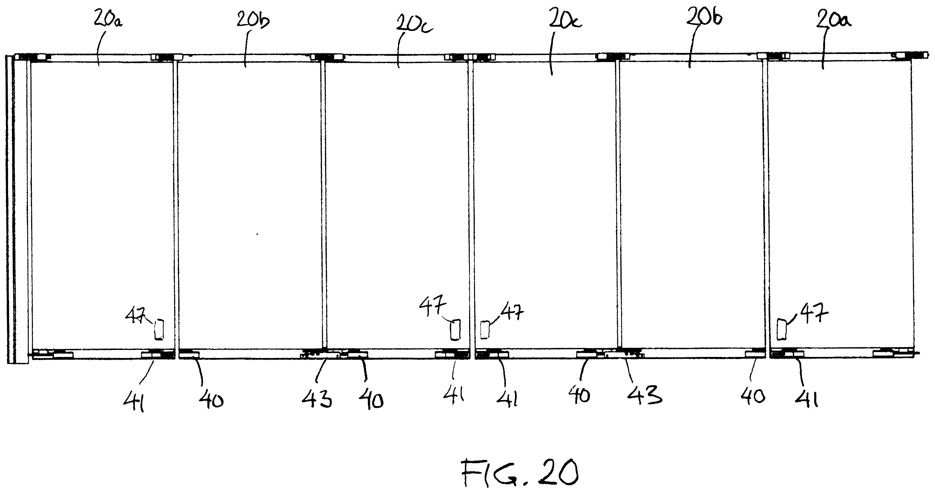

Fig. 20 shows a side view of the side door of the cargo body, formed by two folding doors with three parts. The parts 20a, 20b and 20c of the folding doors have been adjoined with one another by hinges. The number of the doors can be even more than three, but the number of them is most advantageously an odd number, such as three or five, for example. The doors 20a and 20c have pivotable latch handles 47 adjoined with hook-like latch noses 32, by means of which the doors 20a and 20c can be latched to the latching elements 41 in conjunction with the floor of the cargo body. There are corresponding latching elements also in conjunction with the roof of the cargo body, to which corresponding latch noses are latched.

Fig. 21 shows the closing action of the side doors 20a, 20 and 20c of the cargo body. As the doors 20a and 20b adjoined with one another by hinges are being closed, they are pushed towards the latching element 41 in conjunction with the floor of the cargo body. Fig. 21 shows that, in such a situation, the latching element 33 adjoined with the door 20b pushes onto the rollers of the latching and supporting element 43 in conjunction with the floor of the cargo body. Thus, the rollers of the latching and supporting element 43 lift up the doors 20a and 20b such that the latching elements on the doors are at a suitable elevation with the latching elements in conjunction with the floor of the cargo body and it is easy to latch the doors.

Fig. 21 furthermore shows that, as the doors 20a and 20b are pushed towards the latching element 41 in conjunction with the floor of the cargo body, the latch handle 47 is pivoted in the open position. Thus, the hook-like latch nose 32 adjoined with the door 20a is in such a position that it can push into the latching element 41. As the doors 20a and 20b have been pushed to the closed position, the latch handle 47 is pivoted to the closed position, whereby the hook-like latch nose 32 pivots behind the latch roller 42 of the latching element 41 and latches the door.

After this, the door 20c is pivoted towards the second latching element 41 in conjunction with the floor of the cargo body. Fig. 21 shows that the handle 46 of the door 20c is also in the open position, whereby the hook-like latch nose 32 of the door 20c can push into the latching element 41. The door 20c is latched in a corresponding way, by pivoting the handle 46 to the closed position, whereby the hook-like latch nose 32 pivots behind the latch roller 46 of the latching element 41 and latches the door.

Details of a latching mechanism for a cargo body door according to the invention include a latching element located on the lower edge of the door and a latching and supporting element in conjunction with the floor of the cargo body, said elements latching into one another as the door is being closed. In such a setting, there is a roller surface in conjunction with the latching element located on the lower edge of the door or with the latching and supporting element in conjunction with the floor of the cargo body, said roller surface actuating an upward lift of the door as the door is being closed such that the latching element of the door and the latching and supporting element in conjunction with the floor of the cargo body are located at such an elevation relative to one another that the door can easily be closed and latched.

In the latching mechanism, the roller surface formed by one or more rollers is most advantageously located in the latching and supporting element in conjunction with the floor of the cargo body, and the lower edge of the door has a latching element that comes on top of the roller surface. The roller surface formed by one or more rollers can also be located in the latching element on the lower edge of the door, said latching element resting on the latching and supporting element in conjunction with the floor of the cargo body as the door is being closed.

The roller surface formed by two or more rollers in the latching and supporting element in conjunction with the floor of the cargo body and the support surface of the door are two separate pieces or they have been arranged to form a single piece. In the latching mechanism, the latching and supporting element also comprises a vertical roller, to which the latch tip of the latching element can be latched in a lateral direction. The latching mechanism of the folding door can also comprise a latching and supporting element adjoined in conjunction with the floor of the cargo body, which latching and supporting element has a vertical roller, whereto the latch nose comprised in the latching element of the door can be latched. In the latching mechanism, the latching mechanism of a folding door is additionally comprised of one or more support surfaces adjoined in conjunction with the floor of the cargo body, a support plate in conjunction with the door resting on the support surface while the cargo body is loaded with cargo.

### LIST OF REFERENCE NUMBERS

- 10: Folding door
- 11: Floor
- 20a: Door
- 20b: Door
- 20c: Door
- 21: Hinge
- 31: Support plate
- 32: Latch nose
- 33: Latching element
- 34: Latch claw
- 35: Roller
- 36: Roller
- 37: Latch tip
- 40: Support surface
- 41: Latching and supporting element
- 42: Latch roller
- 43: Latching and supporting element
- 44: Latch roller
- 45: Roller
- 45a: Roller
- 45b: Roller
- 46: Support surface
- 47: Latch handle

## Claims

1. A latching mechanism for a cargo body door (10, 20a, 20b, 20c), the latching mechanism comprising a latching element (33) on the lower edge of the door (20b) and a latching and supporting element (43) in conjunction with the floor (11) of the cargo body, the latching and supporting element latching into one another as the door is being closed, **characterised in that**
- the latching mechanism comprises a roller surface in conjunction with the latching element (33) located on the lower edge of the door (20b) of the cargo body or in conjunction with the latching and supporting element (43) in conjunction with the floor (11) of the cargo body, the roller surface causing the door (10, 20a, 20b, 20c) to be lifted upwards as the door is being closed such that the latching element (33) of the door and the latching and supporting element (43) in conjunction with the floor (11) of the cargo body are at such an elevation relative to one another that the door can be easily closed and latched, and
- the roller surface is formed by one or more rollers (45a, 45b), bearings, wheels, roller chains, balls or similar roller elements.

2. A latching mechanism according to claim 1, **characterised in that**, in the latching mechanism of the door (10, 20a, 20b, 20c), the roller surface is located in the latching and supporting element (43) in conjunction with the floor (11) of the cargo body, and the lower edge of the door comprises a latching element (33) that comes on top of the roller surface.

3. A latching mechanism according to claim 1, **characterised in that**, in the latching mechanism of the door (10, 20a, 20b, 20c), the roller surface is located in the latching element (33) on the lower edge of the door, the latching element resting on the latching and supporting element (43) in conjunction with the floor (11) of the cargo body as the door is being closed.

4. A latching mechanism according to claim 2, **characterised in that**, in the latching mechanism of the door (10, 20a, 20b, 20c), the latching and supporting element (43) in conjunction with the floor (11) of the cargo body is a roller surface formed by two or more rollers (45a, 45b) to lift up the door as the door is being closed and a support surface (46) to bear the door when the door is closed, and **in that** the roller surface and support surface (46) are separate pieces or they are arranged to form a single piece.

5. A latching mechanism according to any one of claims 1 to 4, **characterised in that**, in the latching mechanism of the door (10, 20a, 20b, 20c), the latching and supporting element (43) comprises a vertical latch roller (44) whereto a latch tip (37) of the latching element (33) can be latched in a lateral direction.

6. A latching mechanism according to any one of claims 1 to 5, **characterised in that** the latching mechanism of the door (10, 20a, 20b, 20c) comprises a latch nose (32) adjoined with the door (20a, 20c) and a latching and supporting element (41) adjoined in conjunction with the floor (11) of the cargo body, which latching and supporting element comprises a vertical latch roller (42) whereto the latch nose (32) of the door can be latched.

7. A latching mechanism according to any one of claims 1 to 5, **characterised in that**, in the latching mechanism of the door (10, 20a, 20b, 20c), the latching mechanism of the folding door (10) comprises one or more support surfaces (40) adjoined in conjunction with the floor (11) of the cargo body, a support plate (31) adjoined with the door resting on the support surface as the cargo body is loaded.
